# EUROPEAN PATENT SPECIFICATION

(11) **EP 1 585 652 B1**
(45) Date of publication and mention of the grant of the patent: **05.12.2007**
(21) Application number: 03786213.3
(22) Date of filing: 17.12.2003
(51) Int. Cl.: B60R 21/0132, B60R 21/0136

(54) **METHOD OF CONTROLLING A VEHICLE BONNET ACTUATING ASSEMBLY FOR SAFEGUARDING PEDESTRIANS IN THE EVENT OF IMPACT AGAINST THE FRONT BUMPER OF THE VEHICLE**
VERFAHREN ZUR STEUERUNG DER BETÄTIGUNG EINER KRAFTFAHRZEUGHAUBE ZUM SCHUTZ EINES FUSSGÄNGERS IM FALLE EINES ZUSAMMENSTOSSES MIT DER VORDEREN STOSSSTANGE
PROCEDE DE CONTROLE D'ENSEMBLE ACTIONNEUR DE CAPOT DE VEHICULE VISANT A PROTEGER LES PASSANTS EN CAS D'IMPACT SUR LE PARE-CHOCS AVANT DU VEHICULE

(30) Priority: 17.12.2002 IT TO20021091
(43) Date of publication of application: 19.10.2005
(73) Proprietor: TRW Automotive Italia S.p.A, 10129 Torino (IT); TRW Automotive GmbH, 73553 Alfdorf (DE)
(72) Inventor: OLIVERO, Patrizia, I-10028 Trofarello (IT); ÜNLÜ, Timur, 78315 Radolfzell (DE); ROSENGARTEN, Marco, 78343 Gaienhofen (DE)
(74) Representative: Sties, Jochen
(86) International application number: PCT/IT2003/000827
(87) International publication number: WO 2004/054850

(56) References cited:
- EP-A- 0 914 992
- WO-A-02/098715
- DE-A- 10 045 698
- US-A1- 2002 033 755
- US-A1- 2002 180 596

## Description

### TECHNICAL FIELD

The present invention relates to a method of controlling a vehicle bonnet actuating assembly for safeguarding pedestrians in the event of impact against the front bumper of the vehicle.

### BACKGROUND ART

As is known, in a head-on collision with a vehicle, a pedestrian is first struck by the front bumper, which is normally followed by impact against the bonnet of the vehicle.

To prevent serious injury to pedestrians caused by impact against the bonnet, the impact forces, and therefore deceleration of the pedestrian in the event of impact against the front of the vehicle, must be reduced as far as possible.

This can be done by providing a gap between the bonnet and the components housed inside the engine compartment closed by the bonnet, so as to allow the sheet metal of which the bonnet is made to deform substantially freely, and so deaden pedestrian impact. For example, in a vehicle travelling at 40 kilometres an hour, a gap of at least 80 millimetres should be allowed between the bonnet and the components housed inside the engine compartment.

To produce a gap beneath the bonnet, solutions have been proposed in which the vehicle is provided with a bonnet actuating assembly for moving the bonnet from an engine compartment closed position to a raised position in the event of impact.

Impact is detected using a sensor fitted to the front bumper of the vehicle, and which supplies an impact signal indicating impact against the bumper; the signal is supplied to the vehicle electronic central control unit, which, upon impact being detected, activates the bonnet actuating assembly.

DE 100 45 698 A1, considered as closest prior art, describes a bonnet operating system, with a control section operating an actuator to raise a vehicle bonnet in case of a collision between a bumper of the vehicle and an object. For lifting the bonnet, the vehicle speed has to exceed a first threshold value at the time of collision and simultaneously the impact-induced deformation velocity of the bumper has to exceed a second threshold value. The second threshold value is variable and depends on the vehicle speed.

In WO 02/098715 A1, a detector for a safety arrangement in a motor vehicle is adapted to detect an impact between a bumper of the vehicle and an object such as a pedestrian. The detector includes a contact strip adapted to sense contact between the exterior of the bumper and the object as well as a sensor to determine the acceleration of the bumper. In particular, the acceleration of the bumper can be determined as the average or mean value calculated from data provided by several accelerometers attached to the bumper. A calculator analyses the sensed acceleration to determine if it is below a predetermined value. If the sensed acceleration is below the predetermined value, a signal for raising the bonnet is generated.

The solutions proposed so far, however, all have one drawback preventing them from being used to full effect, and which lies in the bonnet actuating assembly also being activated by the vehicle electronic central control unit on detecting impact against the front bumper of the vehicle other than that for which the actuating assembly is designed, thus giving rise to spurious activation of the assembly.

### DISCLOSURE OF INVENTION

It is an object of the present invention to provide a method of controlling a vehicle bonnet actuating assembly, designed to at least partly eliminate the aforementioned drawbacks.

According to the present invention, there is provided a method of controlling a vehicle bonnet actuating assembly, as claimed in Claim 1.

### BRIEF DESCRIPTION OF THE DRAWINGS

A preferred, non-limiting embodiment of the present invention will be described by way of example with reference to the accompanying drawings, in which:
Figure 1 shows, schematically, a vehicle equipped with a bonnet actuating assembly;
Figures 2, 3, 4 and 5 show flow charts of the control method according to the invention;
Figures 6 and 7 show graphs of quantities employed in the control method according to the invention.

### BEST MODE FOR CURRYING OUT THE INVENTION

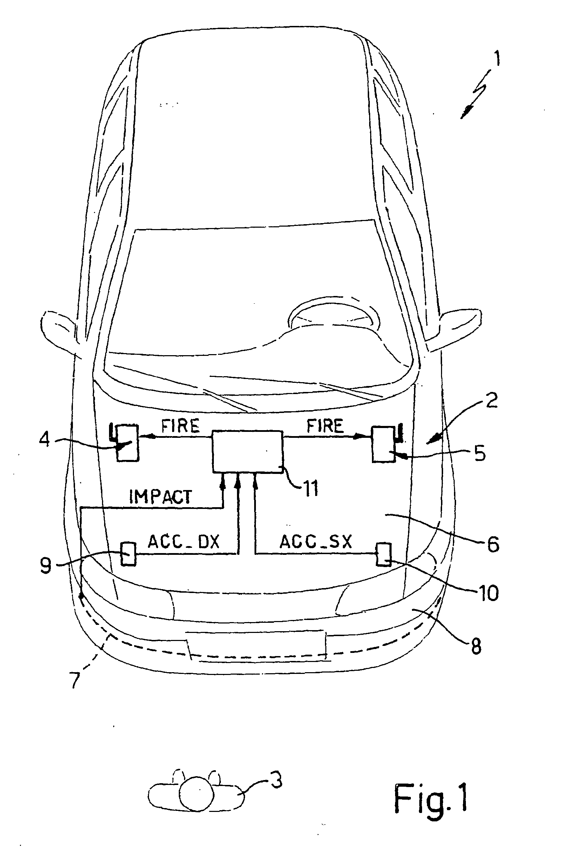

Number 1 in Figure 1 indicates as a whole a vehicle equipped with a bonnet actuating assembly 2 for safeguarding pedestrians 3 in the event of front impact against vehicle 1.

More specifically, bonnet actuating assembly 2, which is known and therefore not described in detail, may preferably, though not necessarily, be of the type substantially comprising a right lift device 4 and a left lift device 5, each of which has a relative integrated control device, and which are interposed between the frame and rear right and left portions of bonnet 6 of vehicle 1 to lift the rear portion of bonnet 6 from the engine compartment closed position to a raised safety position.

Vehicle 1 also comprises an optical-fibre impact sensor 7 fitted to and extending the full length of the front bumper 8 of vehicle 1, and which supplies an impact signal IMPACT containing information relating to the presence and/or duration of impact; a right acceleration sensor 9 and left acceleration sensor 10 fitted respectively to the right and left ends of front bumper 8 of vehicle 1, and which respectively supply a right acceleration signal ACC_DX and left acceleration signal ACC_SX indicating deceleration induced by impact on the right and left ends of front bumper 8 respectively; and an electronic central control unit 11, which receives the impact signal IMPACT and right and left acceleration signals ACC_DX, ACC_SX from impact sensor 7 and right and left acceleration sensors 9, 10, and supplies an activating signal FIRE to activate bonnet actuating assembly 2 and so lift bonnet 6 upon detection of front impact of vehicle 1 against a pedestrian 3.

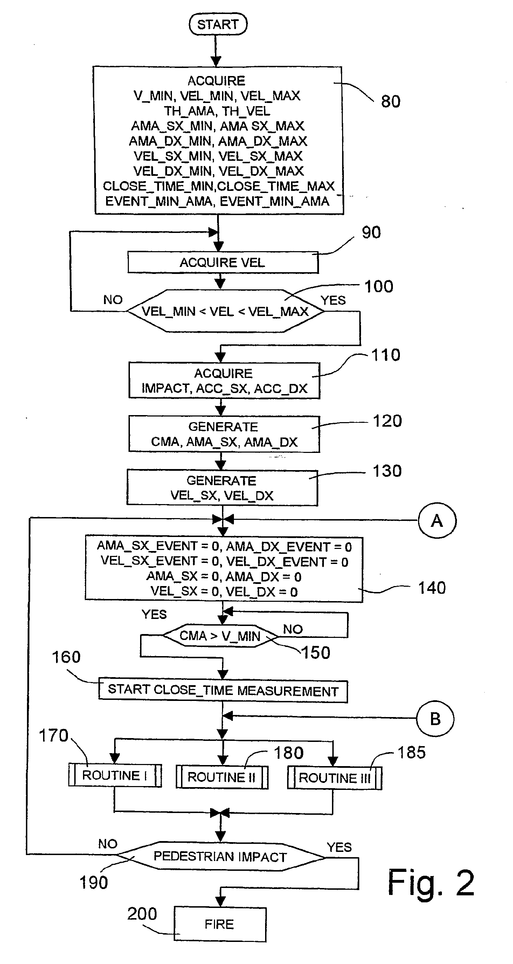

More specifically, electronic central control unit 11 processes impact signal IMPACT and right and left acceleration signals ACC_DX, ACC_SX as described below in detail with reference to the Figure 2 flow chart, to determine whether impact on front bumper 8 is caused by impact of vehicle 1 against a pedestrian 3 - in which case, bonnet actuating assembly 2 is to be activated - or by impact of another sort - in which case, bonnet actuating assembly 2 need not be activated.

Moreover, electronic central control unit 11 only processes impact signal IMPACT and right and left acceleration signals ACC_DX, ACC_SX when vehicle speed is within a predetermined range depending, among other things, on the type of bonnet actuating assembly 2 vehicle 1 is equipped with.

Tests have shown, in fact, that there is no point in activating bonnet actuating assembly 2 at vehicle 1 speeds outside a minimum-maximum range. At below-minimum speed, impact is highly unlikely to cause pedestrian 3 to fall and strike bonnet 6, and low-speed-impact energy exchange between vehicle 1 and pedestrian 3 is so low anyway as to practically rule out any risk of brain damage caused by impact of pedestrian 3 against bonnet 6. At over-maximum speed, on the other hand, the trajectories travelled by pedestrian 3, upon impact, are such that the pedestrians head is prevented from striking bonnet 6. Moreover, at high speed, the activating time of bonnet actuating assembly 2 becomes critical, in the sense that the head of pedestrian 3 may be caused to strike bonnet 6 as this is still being raised, thereby increasing energy exchange between pedestrian 3 and bonnet 6, and therefore the risk of brain damage.

More specifically, with reference to Figure 2, a number of minimum and maximum threshold values, stored beforehand in the memory of electronic central control unit 11 when calibrating bonnet actuating assembly 2, are first acquired (block 80), and in particular:
- a minimum impact value V_MIN, with which a mean impact signal CMA is compared to determine whether or not impact has taken place on front bumper 8 of vehicle 1;
- a pair of minimum and maximum acceleration values AMA_DX_MIN and AMA_DX_MAX, with which a mean right acceleration signal AMA_DX is compared;
- a pair of minimum and maximum acceleration values AMA_SX_MIN and AMA_SX_MAX, with which a mean left acceleration signal AMA_SX is compared;
- a threshold TH_AMA, with which the mean right acceleration signal AMA_DX and mean left acceleration signal AMA_SX are compared;
- a pair of minimum and maximum speed values VEL_DX_MIN and VEL_DX_MAX, with which a right speed signal VEL_DX is compared;
- a pair of minimum and maximum speed values VEL_SX_MIN and VEL_SX_MAX, with which a left speed signal VEL_SX is compared;
- a minimum speed VEL_MIN and maximum speed VEL_MAX, e.g. of 20 and 50 km/h, with which the speed of vehicle 1 is compared;
- a threshold TH_VEL, with which right speed signal VEL_DX and left speed signal VEL_SX are compared;
- a pair of minimum and maximum time values CLOSE_TIME_MIN and CLOSE_TIME_MAX, with which the impact time on front bumper 8 of vehicle 1 is compared; and
- two minimum event values EVENT_MIN_AMA and EVENT_MIN_VEL, with which two event counters are compared.

More specifically, the minimum impact value V_MIN defines a threshold below which definitely no impact on front bumper 8 of vehicle 1 has taken place; the minimum acceleration values AMA_DX_MIN and AMA_SX_MIN and minimum speed values VEL_DX_MIN and VEL_SX_MIN define minimum impact energies below which there is no point in activating bonnet actuating assembly 2; and the maximum acceleration values AMA_DX_MAX and AMA_SX_MAX and maximum speed values VEL_DX_MAX and VEL_SX_MAX define maximum impact energies above which there is also no point in activating bonnet actuating assembly 2, by both cases involving impact against other than a pedestrian.

Thresholds TH_AMA and TH_VEL have a step pattern, as opposed to constant values, the first being a function of the amplitude of mean right acceleration signal AMA_DX and mean left acceleration signal AMA_SX, as explained in detail later on, and the second being a function of the amplitude of right speed signal VEL_DX and left speed signal VEL_SX, as explained in detail later on.

Finally, minimum and maximum time values CLOSE_TIME_MIN, CLOSE_TIME_MAX, which may, for example, assume values of about 10-15 ms and 40 ms respectively, define minimum and maximum impact times below and above which, respectively, it is highly unlikely impact involves a pedestrian 3, so that bonnet actuating assembly 2 need not be activated.

The speed VEL of vehicle 1 is then acquired (block 90) and compared with minimum speed VEL_MIN and maximum speed VEL_MAX (block 100). If the speed VEL of vehicle 1 is below minimum speed VEL_MIN or above maximum speed VEL_MAX (NO output of block 100), then bonnet actuating assembly 2 need not be activated, and block 100 goes back to block 90 until speed VEL falls within the range of minimum speed VEL_MIN and maximum speed VEL_MAX. Conversely, if speed VEL falls within the range of minimum speed VEL_MIN and maximum speed VEL_MAX (YES output of block 100), then the actual process of determining impact or not of a pedestrian 3 against front bumper 8 of vehicle 1 commences.

More specifically, impact signal IMPACT and right and left acceleration signals ACC_DX, ACC_SX are first acquired (block 110), and the mobile averages of impact signal IMPACT and right and left acceleration signals ACC_DX, ACC_SX are calculated to generate a mean impact signal CMA, a mean right acceleration signal AMA_DX, and a mean left acceleration signal AMA_SX respectively (block 120). The mean right acceleration signal AMA_DX and mean left acceleration signal AMA_SX are then time-integrated to generate a right speed signal VEL_DX and left speed signal VEL_SX respectively (block 130).

Four event counters AMA_DX_EVENT, AMA_SX_EVENT, VEL_DX_EVENT, VEL_SX_EVENT, used to store the occurrence of events associated with the right and left acceleration sensors, as explained in detail later on, are then initialized, and mean right acceleration signal AMA_DX, mean left acceleration signal AMA_SX, right speed signal VEL_DX, and left speed signal VEL_SX are also reset (block 140).

Mean impact signal CMA is then compared with minimum impact value V_MIN (block 150). If mean impact signal CMA is below minimum impact value V_MIN (NO output of block 150), this means no object has contacted front bumper 8 of vehicle 1, and block 150 remains on standby. Conversely, if mean impact signal CMA is above minimum impact value V_MIN (YES output of block 150), this means an object has contacted front bumper 8 of vehicle 1, so measurement commences of impact time CLOSE_TIME, which is defined as the length of time mean impact signal CMA remains above minimum impact value V_MIN (block 160).

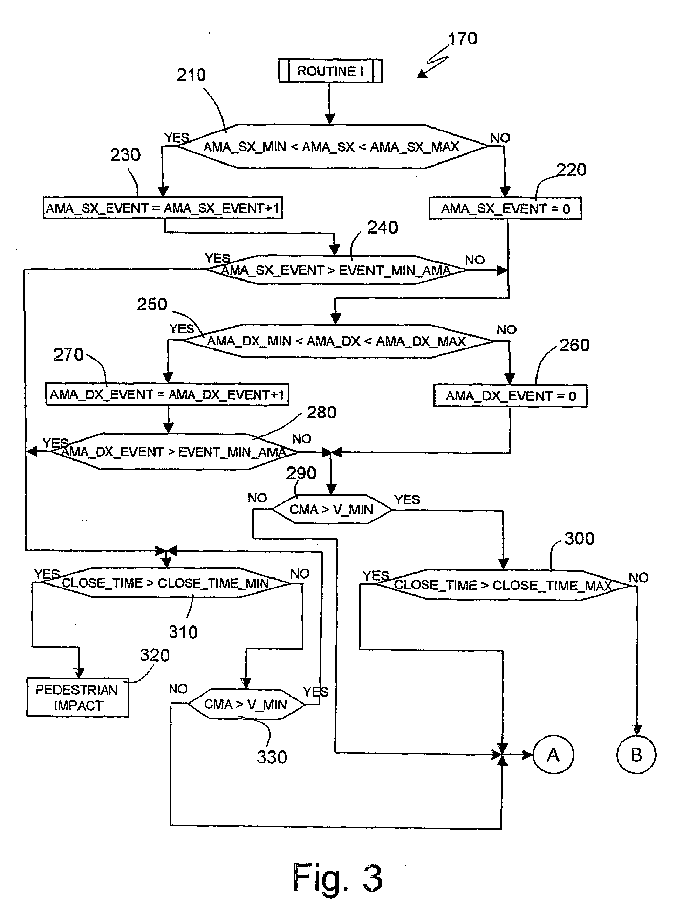

Three parallel routines are then performed to independently determine pedestrian impact or not against bumper 8 of vehicle 1, and wherein the first routine works on the basis of mean right acceleration signal AMA_DX and mean left acceleration signal AMA_SX taken individually (block 170), the second routine works on the basis of right speed signal VEL_DX and left speed signal VEL_SX taken individually (block 180), and the third routine works on the basis of mean right acceleration signal AMA_DX and mean left acceleration signal AMA_SX combined, as well as on the basis of right speed signal VEL_DX and left speed signal VEL_SX combined (block 185), as explained in detail later on with reference to the flow charts in Figures 3, 4 and 5 respectively.

Once the three routines are completed, a check is made to determine whether at least one has determined pedestrian impact against bumper 8 of vehicle 1 (block 190). If none of the routines has determined pedestrian impact against bumper 8 of vehicle 1 (NO output of block 190), the operations described with reference to block 140 onwards are repeated. Conversely, if at least one of the routines has determined pedestrian impact against bumper 8 of vehicle 1 (YES output of block 190), the FIRE signal to activate the bonnet actuating assembly is generated (block 200), and the procedure is terminated.

Figure 3 shows a flow chart of the operations performed in the first routine to determine pedestrian impact against bumper 8 of vehicle 1 on the basis of mean right acceleration signal AMA_DX and mean left acceleration signal AMA_SX taken individually.

As shown in Figure 3, mean left acceleration signal AMA_SX is first compared with minimum and maximum acceleration values AMA_SX_MIN and AMA_SX_MAX (block 210).

If mean left acceleration signal AMA_SX is outside the range defined by minimum and maximum acceleration values AMA_SX_MIN and AMA_SX_MAX (NO output of block 210), the event counter AMA_SX_EVENT is reset (block 220), and the operations described below with reference to block 250 are performed. Conversely, if mean left acceleration signal AMA_SX is within the range defined by minimum and maximum acceleration values AMA_SX_MIN and AMA_SX_MAX (YES output of block 210), the event counter AMA_SX_EVENT is incremented one unit (block 230).

The event counter AMA_SX_EVENT is then compared with the minimum event value EVENT_MIN_AMA (block 240). If counter AMA_SX_EVENT is below minimum event value EVENT_MIN_AMA (NO output of block 240), the operations described below with reference to block 250 are performed. Conversely, if counter AMA_SX_EVENT is above minimum event value EVENT_MIN_AMA (YES output of block 240), the operations described below with reference to block 310 are performed.

In block 250 - which, as stated, is arrived at when event counter AMA_SX_EVENT is below minimum event value EVENT_MIN_AMA (NO output of block 240), and also when event counter AMA_SX_EVENT is reset (block 220) - the mean right acceleration signal AMA_DX is compared with minimum and maximum acceleration values AMA_DX_MIN and AMA_DX_MAX.

If mean right acceleration signal AMA_DX is outside the range defined by minimum and maximum acceleration values AMA_DX_MIN and AMA_DX_MAX (NO output of block 250), event counter AMA_DX_EVENT is reset (block 260), and the operations described below with reference to block 290 are performed. Conversely, if mean right acceleration signal AMA_DX is within the range defined by minimum and maximum acceleration values AMA_DX_MIN and AMA_DX_MAX (YES output of block 250), event counter AMA_DX_EVENT is incremented one unit (block 270).

Event counter AMA_DX_EVENT is then compared with minimum event value EVENT_MIN_AMA (block 280). If event counter AMA_DX_EVENT is below minimum event value EVENT_MIN_AMA (NO output of block 280), the operations described below with reference to block 290 are performed. Conversely, if event counter AMA_DX_EVENT is above minimum event value EVENT_MIN_AMA (YES output of block 280), the operations described below with reference to block 310 are performed.

In block 290 - which, as stated, is arrived at when event counter AMA_DX_EVENT is below minimum event value EVENT_MIN_AMA (NO output of block 280), and also when event counter AMA_DX_EVENT is reset (block 260) - mean impact signal CMA is compared with minimum impact value V_MIN.

If mean impact signal CMA is below minimum impact value V_MIN (NO output of block 290), the operations described with reference to block 140 onwards are repeated. Conversely, if mean impact signal CMA is still above minimum impact value V_MIN (YES output of block 290), impact time CLOSE_TIME is compared with maximum time value CLOSE_TIME_MAX (block 300).

If impact time CLOSE_TIME is below maximum time value CLOSE_TIME_MAX (NO output of block 300), the operations described with reference to block 210 onwards are repeated. Conversely, if impact time CLOSE_TIME is above maximum time value CLOSE_TIME_MAX (YES output of block 300), the operations described with reference to block 140 onwards are repeated.

In block 310 - which, as stated, is arrived at when event counter AMA_SX_EVENT is above minimum event value EVENT_MIN_AMA (YES output of block 240), and also when event counter AMA_DX_EVENT is above minimum event value EVENT_MIN_AMA (YES output of block 280) - impact time CLOSE_TIME is compared with minimum time value CLOSE_TIME_MIN.

If impact time CLOSE_TIME is above minimum time value CLOSE_TIME_MIN (YES output of block 310), a check is made to determine pedestrian impact against front bumper 8 of vehicle 1 (block 320). Conversely, if impact time CLOSE_TIME is below minimum time value CLOSE_TIME_MIN (NO output of block 310), mean impact signal CMA is compared with minimum impact value V _MIN (block 330).

If mean impact signal CMA is below minimum impact value V_MIN (NO output of block 330), the operations described with reference to block 140 onwards are repeated. Conversely, if mean impact signal CMA is above minimum impact value V_MIN (YES output of block 330), the operations described with reference to block 310 onwards are repeated.

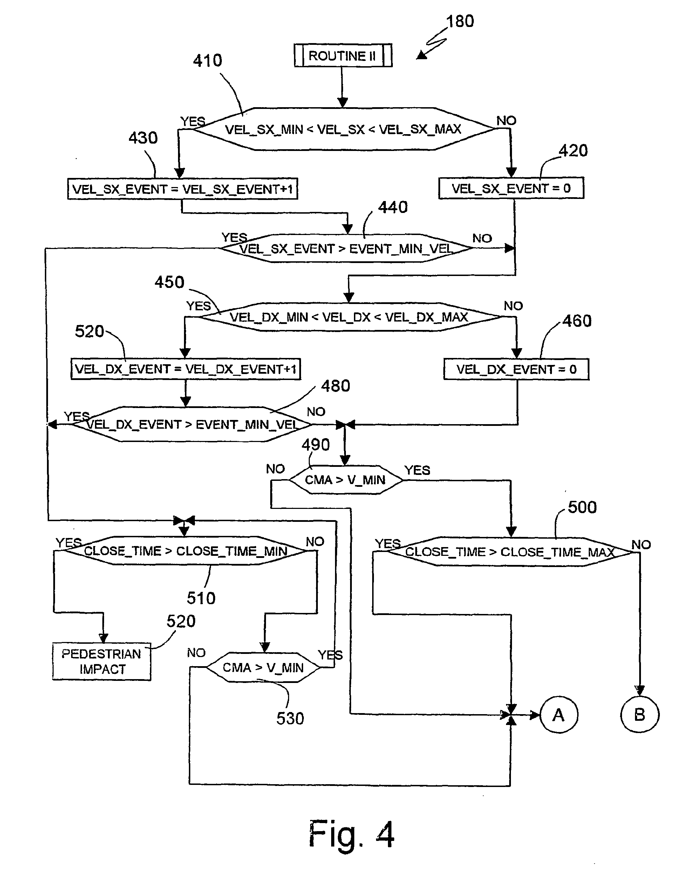

Figure 4 shows a flow chart of the operations performed in the second routine to determine pedestrian impact against bumper 8 of vehicle 1 on the basis of right speed signal VEL_DX and left speed signal VEL_SX taken individually.

As shown in Figure 4, left speed signal VEL_SX is first compared with minimum and maximum speed values VEL_SX_MIN and VEL_SX_MAX (block 410).

If left speed signal VEL_SX is outside the range defined by minimum and maximum speed values VEL_SX_MIN and VEL_SX_MAX (NO output of block 410), the event counter VEL_SX_EVENT is reset (block 420), and the operations described below with reference to block 450 are performed. Conversely, if left speed signal VEL_SX is within the range defined by minimum and maximum speed values VEL_SX_MIN and VEL_SX_MAX (YES output of block 410), the event counter VEL_SX_EVENT is incremented one unit (block 430).

The event counter VEL_SX_EVENT is then compared with the minimum event value EVENT_MIN_VEL (block 440). If counter VEL_SX_EVENT is below minimum event value EVENT_MIN_VEL (NO output of block 440), the operations described below with reference to block 450 are performed. Conversely, if counter VEL_SX_EVENT is above minimum event value EVENT_MIN_VEL (YES output of block 440), the operations described below with reference to block 510 are performed.

In block 450 - which, as stated, is arrived at when event counter VEL_SX_EVENT is below minimum event value EvENT_MIN_VEL (NO output of block 440), and also when event counter VEL_SX_EVENT is reset (block 420) - the right speed signal VEL_DX is compared with minimum and maximum speed values VEL_DX_MIN and VEL_DX_MAX.

If right speed signal VEL_DX is outside the range defined by minimum and maximum speed values VEL_DX_MIN and VEL_DX_MAX (NO output of block 450), event counter VEL_DX_EVENT is reset (block 460), and the operations described below with reference to block 490 are performed. Conversely, if right speed signal VEL_DX is within the range defined by minimum and maximum speed values VEL_DX_MIN and VEL_DX_MAX (YES output of block 450), event counter VEL_DX_EVENT is incremented one unit (block 470).

Event counter VEL_DX_EVENT is then compared with minimum event value EVENT_MIN_VEL (block 480). If event counter VEL_DX_EVENT is below minimum event value EVENT_MIN_VEL (NO output of block 480), the operations described below with reference to block 490 are performed. Conversely, if event counter VEL_DX_EVENT is still above minimum event value EVENT_MIN_VEL (YES output of block 480), the operations described below with reference to block 510 are performed.

In block 490 - which, as stated, is arrived at when event counter VEL_DX_EVENT is below minimum event value EVENT_MIN_VEL (NO output of block 480), and also when event counter VEL_DX_EVENT is reset (block 460) - mean impact signal CMA is compared with minimum impact value V_MIN.

If mean impact signal CMA is below minimum impact value V_MIN (NO output of block 490), the operations described with reference to block 140 onwards are repeated. Conversely, if mean impact signal CMA is above minimum impact value V_MIN (YES output of block 490), impact time CLOSE_TIME is compared with maximum time value CLOSE_TIME_MAX (block 500).

If impact time CLOSE_TIME is below maximum time value CLOSE_TIME_MAX (NO output of block 500), the operations described with reference to block 410 onwards are repeated. Conversely, if impact time CLOSE_TIME is above maximum time value CLOSE_TIME_MAX (YES output of block 500), the operations described with reference to block 140 onwards are repeated.

In block 510 - which, as stated, is arrived at when event counter VEL_SX_EVENT is above minimum event value EVENT_MIN_VEL (YES output of block 440), and also when event counter VEL_DX_EVENT is above minimum event value EVENT_MIN_VEL (YES output of block 480) - impact time CLOSE_TIME is compared with minimum time value CLOSE_TIME_MIN.

If impact time CLOSE_TIME is above minimum time value CLOSE_TIME_MIN (YES output of block 510), a check is made to determine pedestrian impact against front bumper 8 of vehicle 1 (block 520). Conversely, if impact time CLOSE_TIME is below minimum time value CLOSE_TIME_MIN (NO output of block 510), mean impact signal CMA is compared with minimum impact value V_MIN (block 530).

If mean impact signal CMA is below minimum impact value V_MIN (NO output of block 530), the operations described with reference to block 140 onwards are repeated. Conversely, if mean impact signal CMA is above minimum impact value V_MIN (YES output of block 530), the operations described with reference to block 510 onwards are repeated.

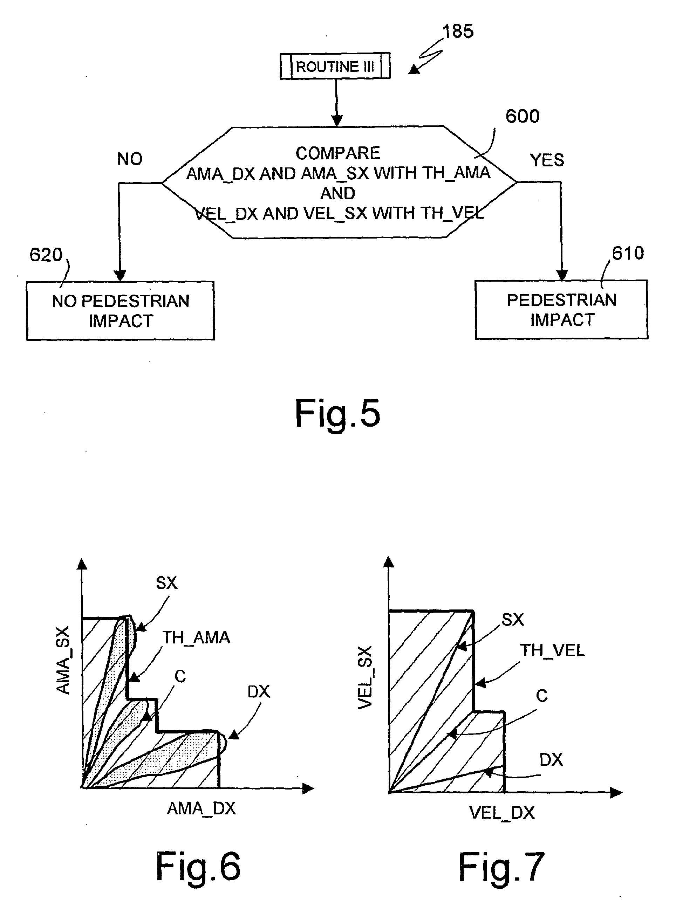

Figure 5 shows a flow chart of the operations performed by the third routine to determine pedestrian impact against bumper 8 of vehicle 1 on the basis of mean right acceleration signal AMA_DX and mean left acceleration signal AMA_SX combined, and on the basis of right speed signal VEL_DX and left speed signal VEL_SX combined.

This routine is based on the following principle. If the amplitude of a mean left acceleration signal AMA_SX is represented in an X,Y cartesian diagram as a function of the amplitude of a mean right acceleration signal AMA_DX, a lobe is obtained, which slopes more or less with respect to the two axes depending on which of the two amplitudes is greater, i.e. depending on where impact against front bumper 8 of vehicle 1 occurs.

That is, as shown in Figure 6, in the event of impact against a right portion of front bumper 8, the resulting lobe is closer to the mean right acceleration signal AMA_DX axis, since the amplitude of mean right acceleration signal AMA_DX is greater than that of mean left acceleration signal AMA_SX. Conversely, in the event of impact against a left portion of front bumper 8, the resulting lobe is closer to the mean left acceleration signal AMA_SX axis, since the amplitude of mean left acceleration signal AMA_SX is greater than that of mean right acceleration signal AMA_DX. Whereas, in the event of impact against a central portion of front bumper 8, the resulting lobe is located between the first two, since the amplitude of mean right acceleration signal AMA_DX substantially equals that of mean left acceleration signal AMA_SX.

Now, by representing on the cartesian diagram all the lobes relating to a series of other than pedestrian impacts against front bumper 8 of vehicle 1 - which, as stated, do not call for activation of bonnet actuating assembly 2, and the characteristics of which can be defined by specific standards issued by appropriate authorities or directly by the vehicle manufacturer - a step line can be drawn substantially representing the envelope of all these lobes, and which divides the cartesian diagram into two areas : the area (hatched) bounded by the step line represents points involving other than pedestrian impact and therefore not requiring activation of bonnet actuating assembly 2, and the remaining area of the diagram represents points involving pedestrian impact and therefore requiring activation of bonnet actuating assembly 2. The step line defines the threshold TH_AMA referred to above with reference to block 80, and with which mean right acceleration signal AMA_DX and mean left acceleration signal AMA_SX, taken together, are compared.

The same also applies to right speed signal VEL_DX and left speed signal VEL_SX, thus allowing to define the threshold TH_VEL referred to above with reference to block 80, and with which right speed signal VEL_DX and left speed signal VEL_SX are compared (Figure 7). The only difference with respect to threshold TH_AMA is that representing the amplitude of a left speed signal VEL_SX as a function of that of a right speed signal VEL_DX on an X,Y cartesian diagram produces a line as opposed to a lobe.

As shown in Figure 5, the third routine therefore determines whether the point defined by the amplitudes of mean right acceleration signal AMA_DX and mean left acceleration signal AMA_SX falls within the area bounded by the step line defining threshold TH_AMA, and whether the point defined by the amplitudes of right speed signal VEL_DX and left speed signal VEL_SX falls within the area bounded by the step line defining threshold TH_VEL (block 600).

More specifically, the amplitudes of mean right acceleration signal AMA_DX and mean left acceleration signal AMA_SX are actually compared with threshold TH_AMA by comparing them with individual threshold values defining the various portions of the threshold TH_AMA step pattern. More specifically, in the event of impact against the right portion of front bumper 8 of vehicle 1, the amplitude of mean right acceleration signal AMA_DX is compared with a threshold value defining the bottom right horizontal portion of threshold TH_AMA in Figure 6; in the event of impact against the left portion of front bumper 8 of vehicle 1, the amplitude of mean left acceleration signal AMA_SX is compared with a threshold value defining the top left vertical portion of threshold TH_AMA in Figure 6; and, in the event of impact against the central portion of front bumper 8 of vehicle 1, the amplitude of mean right acceleration signal AMA_DX and the amplitude of mean left acceleration signal AMA_SX are compared with respective threshold values defining the horizontal and vertical central portions of threshold TH_AMA in Figure 6.

The same obviously also applies when comparing the amplitudes of right speed signal VEL_DX and left speed signal VEL_SX with threshold TH_VEL.

If both points defined respectively by the amplitudes of mean right acceleration signal AMA_DX and mean left acceleration signal AMA_SX, and by the amplitudes of right speed signal VEL_DX and left speed signal VEL_SX, are outside the areas bounded by respective thresholds TH_AMA and TH_VEL (YES output of block 600), this indicates pedestrian impact against front bumper 8 of vehicle 1 (block 610). Conversely, if even only one of the two points defined respectively by the amplitudes of mean right acceleration signal AMA_DX and mean left acceleration signal AMA_SX, and by the amplitudes of right speed signal VEL_DX and left speed signal VEL_SX, lies within the area bounded by the respective threshold TH_AMA or TH_VEL (NO output of block 600), this indicates other than pedestrian impact against front bumper 8 of vehicle 1 (block 620).

The advantages of the present invention will be clear from the foregoing description.

In particular, tests have shown that the proposed solution provides for drastically reducing spurious activation of bonnet actuating assembly 2.

Clearly, changes may be made to the control method as described and illustrated herein without, however, departing from the scope of the present invention as defined in the accompanying Claims.

For example, as opposed to using two acceleration signals, one right and one left, each of the two routines for determining pedestrian impact against front bumper 8 of vehicle 1, as described with reference to blocks 170 and 180 in Figure 2 and the Figure 3 and 4 flow charts, may be performed using one acceleration signal generated by one acceleration sensor suitably located on the front bumper of the vehicle.

Regardless of whether one or two acceleration signals are used, pedestrian impact may be determined using the acceleration signal/s directly, without calculating the mobile average.

Moreover, pedestrian impact against front bumper 8 of vehicle 1 may even be determined using only one of the two routines, and therefore based solely on either the mean acceleration signal/s (or directly on the acceleration signal/s) or the speed signal/s (in turn generated from the mean acceleration signal/s or acceleration signal/s).

## Claims

1. A method of controlling a bonnet actuating assembly (2) of a vehicle (1) to safeguard pedestrians (3) in the event of impact against the front bumper (8) of the vehicle (1), comprising the steps of:
- acquiring an impact signal (IMPACT, CMA) containing information relating to the presence and/or duration of impact against the front bumper (8);
- acquiring a first acceleration signal (ACC_DX, AMA_DX, VEL_DX) indicating the intensity of impact-induced deceleration of an end portion of the front bumper (8), and a second acceleration signal (ACC_SX, AMA_SX, VEL_SX) indicating the intensity of impact-induced deceleration of an opposite end portion of the front bumper (8);
- comparing the impact signal (IMPACT, CMA) and the acceleration signals (ACC_DX, ACC_SX, AMA_DX, AMA_SX, VEL_DX, VEL_SX) with respective threshold values (V_MIN, AMA_DX_MIN, AMA_DX_MAX, AMA_SX_MIN, AMA_SX_MAX, VEL_DX_MIN, VEL_DX_MAX, VEL_SX_MIN, VEL_SX_MAX, TH_AMA, TH_VEL);
- determining whether to activate the bonnet actuating assembly (2) on the basis of the outcome of said comparisons;
**characterized in that** the step of comparing the impact signal and the acceleration signals with respective threshold values comprises the steps of:
- comparing the impact signal (IMPACT, CMA) with a respective minimum threshold value (V_MIN);
- dividing a diagram of the amplitudes of said first and said second acceleration signal (ACC_DX, ACC_SX, AMA_DX, AMA_SX, VEL_DX, VEL_SX) into a first and a second area (TH_AMA, TH_VEL), said first area being defined by the amplitudes of said first and said second acceleration signal (ACC_DX, ACC_SX, AMA_DX, AMA_SX, VEL_DX, VEL_SX) generated by impact of a pedestrian (3) against said front bumper (8), and said second area being defined by the amplitudes of said first and said second acceleration signal (ACC_DX, ACC_SX, AMA_DX, AMA_SX, VEL_DX, VEL_SX) generated by impact of an object other than a pedestrian (3) against said front bumper (8);
and **in that** the step of determining whether to activate the bonnet actuating assembly (2) comprises the step of:
- activating the bonnet actuating assembly (2) when the impact signal (IMPACT, CMA) satisfies a first predetermined relationship with the respective minimum threshold value (V_MIN) at least for a predetermined minimum time (CLOSE_TIME_MIN), and the amplitudes of said first and said second acceleration signal (ACC-DX, ACC_SX, AMA_DX, AMA_SX, VEL_DX, VEL_SX) lie within said first area (TH_AMA, TH_VEL).

2. A method as claimed in Claim 1, **characterized in that** the step of comparing the impact signal and the acceleration signal with respective threshold values comprises the steps of:
- comparing the impact signal (IMPACT, CMA) with a respective minimum threshold value (V_MIN);
- comparing the acceleration signal (ACC_DX, ACC_SX, AMA_DX, AMA_SX, VEL_DX,_VEL_SX) with a respective minimum threshold value (AMA_DX_MIN, AMA_SX_MIN, VEL_DX_MIN, VEL_SX_MIN);
and **in that** the step of determining whether to activate the bonnet actuating assembly (2) comprises the step of:
- activating the bonnet actuating assembly (2) when the impact signal (IMPACT, CMA) satisfies a first predetermined relationship with the respective minimum threshold value (V_MIN) at least for a predetermined minimum time (CLOSE_TIME_MIN), and the acceleration signal (ACC_DX, ACC_SX, AMA_DX, AMA_SX, VEL_DX, VEL_SX) satisfies a second predetermined relationship with the respective minimum threshold value (AMA_DX_MIN, AMA_SX_MIN, VEL_DX_MIN, VEL_SX_MIN) at least for a predetermined minimum time (EVENT_MIN_AMA, EVENT_MIN_VEL).

3. A method as claimed in Claim 2, **characterized in that** the step of determining whether to activate the bonnet actuating assembly (2) also comprises the step of:
- not activating the bonnet actuating assembly (2) when the acceleration signal (ACC_DX, ACC_SX, AMA_DX, AMA_SX, VEL_DX, VEL_SX) fails to satisfy the second predetermined relationship with the respective minimum threshold value (AMA_DX_MIN, AMA_SX_MIN, VEL_DX_MIN, VEL_SX_MIN) at least for a predetermined minimum time (EVENT_MIN_AMA, EVENT_MIN_VEL) within a predetermined maximum time (CLOSE_TIME_MAX) from when the impact signal (IMPACT, CMA) satisfies the first predetermined relationship with the respective minimum threshold value (V_MIN).

4. A method as claimed in Claim 2 or 3, **characterized in that** the first predetermined relationship is defined by the condition that the impact signal (IMPACT, CMA) be above the respective minimum threshold value (V_MIN), and **in that** the second predetermined relationship is defined by the condition that the acceleration signal (ACC_DX, ACC_SX, AMA_DX, AMA_SX, VEL_DX, VEL_SX) be above the respective minimum threshold value (AMA_DX_MIN, AMA_SX_MIN, VEL_DX_MIN, VEL_SX_MIN).

5. A method as claimed in any one of Claims 2 to 4, **characterized in that** the comparing step also comprises the step of:
- comparing the acceleration signal (ACC_DX, ACC_SX, AMA_DX, AMA_SX, VEL_DX, VEL_SX) with a respective maximum threshold value (AMA_DX_MAX. AMA_SX_MAX, VEL_DX_MAX, VEL_SX_MAX);
and **in that** the step of determining whether to activate the bonnet actuating assembly (2) also comprises the step of:
- activating the bonnet actuating assembly (2) when the acceleration signal (ACC_DX, ACC_SX, AMA_DX, AMA_SX, VEL_DX, VEL_SX) also satisfies a third predetermined relationship with the respective maximum threshold value (AMA_DX_MAX, AMA_SX_MAX, VEL_DX_MAX, VEL_SX_MAX).

6. A method as claimed in Claim 5, **characterized in that** the third predetermined relationship is defined by the condition that the acceleration signal (ACC_DX, ACC_SX, AMA_DX, AMA_SX, VEL_DX, VEL_SX) be below the respective maximum threshold value (AMA_DX_MAX, AMA_SX_MAX, VEL_DX_MAX, VEL_SX_MAX).

7. A method as claimed in Claim 1, **characterized in that** the step of comparing the impact signal and the acceleration signal with respective threshold values comprises the steps of:
- comparing the impact signal (IMPACT, CMA) with a respective minimum threshold value (V_MIN);
- comparing the first and second acceleration signal (ACC_DX, ACC_SX, AMA_DX, AMA_SX, VEL_DX, VEL_SX) with a respective minimum threshold value (AMA_DX_MIN, AMA_SX_MIN, VEL_DX_MIN, VEL_SX_MIN);
and **in that** the step of determining whether to activate the bonnet actuating assembly (2) comprises the step of:
- activating the bonnet actuating assembly (2) when the impact signal (IMPACT, CMA) satisfies a first predetermined relationship with the respective minimum threshold value (\/_MIN) at least for a predetermined minimum time (CLOSE_TIME_MIN), and at least the first or second acceleration signal (ACC_DX, ACC_SX, AMA_DX, AMA_SX, VEL_DX, VEL_SX) satisfies a second predetermined relationship with the respective minimum threshold value (AMA_OX_MIN, AMA_SX_MIN, VEL_DX_MIN, VEL_SX_MIN) at least for a predetermined minimum time (EVENT_MIN_AMA, EVENT_MIN_VEL).

8. A method as claimed in Claim 7, **characterized in that** the step of determining whether to activate the bonnet actuating assembly (2) also comprises the step of:
- not activating the bonnet actuating assembly (2) when neither the first nor second acceleration signal (ACC_DX, ACC_SX, AMA_DX, AMA_SX, VEL_DX, VEL_SX) satisfies the second predetermined relationship with the respective minimum threshold value (AMA_DX_MIN, AMA_SX_MIN, VEL_DX_MIN, VEL_SX_MIN) at least for a predetermined minimum time (EVENT_MIN_AMA, EVENT_MIN_VEL) within a predetermined maximum time (CLOSE_TIME_MAX) from when the impact signal (IMPACT, CMA) satisfies the first predetermined relationship with the respective minimum threshold value (V_MIN).

9. A method as claimed in Claim 7 or 8, **characterized in that** the first predetermined relationship is defined by the condition that the impact signal (IMPACT, CMA) be above the respective minimum threshold value (V_MIN), and **in that** the second predetermined relationship is defined by the condition that the acceleration signal (ACC_DX, ACC_SX, AMA_DX, AMA_SX, VEL_DX, VEL_SX) be above the respective minimum threshold value (AMA_DX_MIN, AMA_SX_MIN, VEL_DX_MIN, VEL_SX_MIN).

10. A method as claimed in any one of Claims 7 to 9, **characterized in that** the step of comparing the impact signal and the first and second acceleration signal with respective threshold values also comprises the steps of:
- comparing the first and second acceleration signal (ACC_DX, ACC_SX, AMA_OX, AMA_SX, VEL_DX, VEL_SX) with a respective maximum threshold value (AMA_DX_MAX, AMA_SX_MAX, VEL_DX_MAX, VEL_SX_MAX);
and **in that** the step of determining whether to activate the bonnet actuating assembly (2) also comprises the step of:
- activating the bonnet actuating assembly (2) when the acceleration signal (ACC_DX, ACC_SX, AMA_DX, AMA_SX, VEL_DX, VEL_SX) satisfying the second predetermined relationship with the respective minimum threshold value (AMA_DX_MIN, AMA_SX_MIN, VEL_OX_MIN, VEL_SX_MIN) at least for a predetermined minimum time (EVENT_MIN_AMA, EVENT_MIN_VEL) also satisfies a third predetermined relationship with the respective maximum threshold value (AMA_DX_MAX, AMA_SX_MAX, VEL_OX_MAX, VEL_SX_MAX).

11. A method as claimed in Claim 10, **characterized in that** the third predetermined relationship is defined by the condition that the acceleration signal (ACC_DX, ACC_SX, AMA_DX, AMA_SX, VEL_DX, VEL_SX) is below the respective maximum threshold value (AMA_DX_MAX, AMA_SX_MAX, VEL_DX_MAX, VEL_SX_MAX).

12. A method as claimed in any one of the foregoing Claims, **characterized in that** said acceleration signal (ACC_DX, ACC_SX, AMA_DX, AMA_SX, VEL_DX, VEL_SX) is an acceleration signal generated by an impact sensor (7) located on the front bumper (8) of the vehicle (1).

13. A method as claimed in any one of Claims 1 to 11, **characterized in that** said acceleration signal (ACC_DX, ACC_SX, AMA_DX, AMA_SX, VEL_DX, VEL_SX) is the mobile average of an acceleration signal generated by an impact sensor (7) located on the front bumper (8) of the vehicle (1).

14. A method as claimed in any one of Claims 1 to 11, **characterized in that** said acceleration signal (ACC_DX, ACC_SX, AMA_DX, AMA_SX, VEL_DX, VEL_SX) is the time integral of an acceleration signal generated by an impact sensor (7) located on the front bumper (8) of the vehicle (1).

15. A method as claimed in any one of Claims 1 to 11, **characterized in that** said acceleration signal (ACC_DX, ACC_SX, AMA_DX, AMA_SX, VEL_DX, VEL_SX) is the time integral of the mobile average of an acceleration signal generated by an impact sensor (7) located on the front bumper (8) of the vehicle (1).

## Patentansprüche

1. Verfahren zur Steuerung einer Motorhaubebetätigungsbaugruppe (2) eines Fahrzeugs (1) zum Schutz von Fußgängern (3) bei einem Aufprall gegen die vordere Stoßstange (8) des Fahrzeugs (1), das die Schritte umfasst, bei denen:
- ein Aufprallsignal (IMPACT, CMA), das eine Information bezüglich des Vorliegens und/oder der Dauer eines Aufpralls gegen die vordere Stoßstange (8) enthält, erhalten wird;
- ein erstes Beschleunigungssignal (ACC_DX, AMA_DX, VEL_DX), das die Intensität der durch den Aufprall herbeigeführten Verzögerung eines Endabschnitts der vorderen Stoßstange (8) angibt, und ein zweites Beschleunigungssignal (ACC_SX, AMA_DX, VEL_SX), das die Intensität der durch den Aufprall herbeigeführten Verzögerung eines gegenüberliegenden Endabschnitts der vorderen Stoßstange (8) angibt, erhalten werden;
- das Aufprallsignal (IMPACT, CMA) und die Beschleunigungssignale (ACC_DX, ACC_SX, AMA_DX, AMA_SX, VEL_DX, VEL_SX) mit dazugehörigen Schwellenwerten (V_MIN, AMA_DX_MIN, AMA_DX_MAX, AMA_SX_MIN, AMA_SX_MAX, VEL_DX_MIN, VEL_DX_MAX, VEL_SX_MIN, VEL_SX_MAX, TH_AMA, TH_VEL) verglichen werden;
- auf Grundlage des Ergebnisses der Vergleiche bestimmt wird, ob die Motorhaubebetätigungsbaugruppe (2) aktiviert wird;
**dadurch gekennzeichnet, dass** der Schritt, bei dem das Aufprallsignal und die Beschleunigungssignale mit dazugehörigen Schwellenwerten verglichen werden, die Schritte umfasst, bei denen:
- das Aufprallsignal (IMPACT, CMA) mit einem dazugehörigen Mindestschwellenwert (V_MIN) verglichen wird;
- ein Diagramm der Amplituden des ersten und zweiten Beschleunigungssignals (ACC_DX, ACC_SX, AMA_DX, AMA_SX, VEL_DX, VEL_SX) in einen ersten und zweiten Bereich (TH_AMA, TH_VEL) unterteilt wird, wobei der erste Bereich durch die Amplituden des ersten und zweiten Beschleunigungssignals (ACC_DX, ACC_SX, AMA_DX, AMA_SX, VEL_DX, VEL_SX) begrenzt ist, die durch den Aufprall eines Fußgängers (3) gegen die vordere Stoßstange (8) erzeugt werden, und der zweite Bereich durch die Amplituden des ersten und zweiten Beschleunigungssignals (ACC_DX, ACC_SX, AMA_DX, AMA_SX, VEL_DX, VEL_SX) begrenzt ist, die durch den Aufprall eines sich von einem Fußgänger (3) unterscheidenden Objekts gegen die vordere Stoßstange (8) erzeugt werden;
und dass der Schritt, bei dem bestimmt wird, ob die Motorhaubebetätigungsbaugruppe (2) aktiviert wird, den Schritt umfasst, bei dem:
- die Motorhaubebetätigungsbaugruppe (2) aktiviert wird, wenn das Aufprallsignal (IMPACT, CMA) zumindest für eine vorbestimmte Mindestdauer (CLOSE_TIME_MIN) in einer ersten vorbestimmten Beziehung zu dem dazugehörigen Mindestschwellenwert (V _MIN) steht und die Amplituden des ersten und zweiten Beschleunigungssignals (ACC_DX, ACC_SX, AMA_DX, AMA_SX, VEL_DX, VEL_SX) innerhalb des ersten Bereichs (TH_AMA, TH_VEL) liegen.

2. Verfahren nach Anspruch 1, **dadurch gekennzeichnet, dass** der Schritt, bei dem das Aufprallsignal und das Beschleunigungssignal mit dazugehörigen Schwellenwerten vergleichen werden, die Schritte umfasst, bei denen:
- das Aufprallsignal (IMPACT, CMA) mit einem dazugehörigen Mindestschwellenwert (V_MIN) vergleichen wird;
- das Beschleunigungssignal (ACC_DX, ACC_SX, AMA_DX, AMA_SX, VEL_DX, VEL_SX) mit einem dazugehörigen Mindestschwellenwert (AMA_DX_MIN, AMA-SX_MIN, VEL_DX-MIN, VEL_SX_MIN) vergleichen wird;
und dass der Schritt, bei dem bestimmt wird, ob die Motorhaubebetätigungsbaugruppe (2) aktiviert wird, den Schritt umfasst, bei dem:
- die Motorhaubebetätigungsbaugruppe (2) aktiviert wird, wenn das Aufprallsignal (IMPACT, CMA) zumindest für eine vorbestimmte Mindestdauer (CLOSE_TIME_MIN) in einer ersten vorbestimmten Beziehung zu dem dazugehörigen Mindestschwellenwert (V_MIN) steht und das Beschleunigungssignal (ACC_DX, ACC_SX, AMA_DX, AMA_SX, VEL_DX, VEL_SX) zumindest für eine vorbestimmte Mindestdauer (EVENT_MIN_AMA, EVENT_MIN_VEL) in einer zweiten vorbestimmten Beziehung zu dem dazugehörigen Mindestschwellenwert (AMA_DX_MIN, AM_SX_MIN, VEL_DX_MIN, VEL_SX_MIN) steht.

3. Verfahren nach Anspruch 2, **dadurch gekennzeichnet, dass** der Schritt, bei dem bestimmt wird, ob die Motorhaubebetätigungsbaugruppe (2) aktiviert wird, auch den Schritt umfasst, bei dem:
- die Motorbetätigungsbaugruppe (2) nicht aktiviert wird, wenn das Beschleunigungssignal (ACC_DX, ACC_SX, AMA_DX, AMA_SX, VEL_DX, VEL_SX) nicht zumindest für eine vorbestimmte Mindestdauer (EVENT_MIN_AMA, EVENT_MIN_VEL) innerhalb einer vorbestimmten Höchstdauer (CLOSE_TIME_MAX) ab dem Zeitpunkt, ab dem das Aufprallsignal (IMPACT, CMA) in der ersten vorbestimmten Beziehung zu dem dazugehörigen Mindestschwellenwert (V_MIN) steht, in der zweiten vorbestimmten Beziehung zu dem dazugehörigen Mindestschwellenwert (AMA_DX_MIN, AMA_SX_MIN, VEL_DX_MIN, VEL_SX_MIN) steht.

4. Verfahren nach Anspruch 2 oder 3, **dadurch gekennzeichnet, dass** die erste vorbestimmte Beziehung durch die Bedingung definiert ist, dass das Aufprallsignal (IMPACT, CMA) größer ist als der dazugehörige Mindestschwellenwert (V_MIN), und dass die zweite vorbestimmte Beziehung durch die Bedingung definiert ist, dass das Beschleunigungssignal (ACC_DX, ACC_SX, AMA_DX, AMA_SX, VEL_DX, VEL_SX) größer ist als der dazugehörige Mindestschwellenwert (AMA_DX_MIN, AM_SX_MIN, VEL_DX_MIN, VEL_SX_MIN).

5. Verfahren nach einem der Ansprüche 2 bis 4, **dadurch gekennzeichnet, dass** der Vergleichsschritt auch den Schritt umfasst, bei dem:
- das Beschleunigungssignal (ACC_DX, ACC_SX, AMA_DX, AMA_SX, VEL_DX, VEL_SX) mit einem dazugehörigen Höchstschwellenwert (AMA_DX_MAX, AM_SX_MAX, VEL_DX_MAX, VEL_SX_MAX) verglichen wird;
und dass der Schritt, bei dem bestimmt wird, ob die Motorhaubebetätigungsbaugruppe (2) aktiviert wird, auch den Schritt umfasst, bei dem:
- die Motorhaubebetätigungsbaugruppe (2) aktiviert wird, wenn das Beschleunigungssignal (ACC_DX, ACC_SX, AMA_DX, AMA_SX, VEL_DX, VEL_SX) auch in einer dritten vorbestimmten Beziehung zu dem dazugehörigen Höchstschwellenwert (AMA_DX_MAX, AM_SX_MAX, VEL_DX_MAX, VEL_SX_MAX) steht.

6. Verfahren nach Anspruch 5, **dadurch gekennzeichnet, dass** die dritte vorbestimmte Beziehung durch die Bedingung definiert ist, dass das Beschleunigungssignal (ACC_DX, ACC_SX, AMA_DX, AMA_SX, VEL_DX, VEL_SX) kleiner ist als der dazugehörige Höchstschwellenwert (AMA_DX_MAX, AMA_SX_MAX, VEL_DX_MAX, VEL_SX_MAX).

7. Verfahren nach Anspruch 1, **dadurch gekennzeichnet, dass** der Schritt, bei dem das Aufprallsignal und das Beschleunigungssignal mit dazugehörigen Schwellenwerten verglichen werden, die Schritte umfasst, bei denen:
- das Aufprallsignal (IMPACT, CMA) mit einem dazugehörigen Mindestschwellenwert (V_MIN) verglichen wird;
- das erste und zweite Beschleunigungssignal (ACC_DX, ACC_SX, AMA_DX, AMA_SX, VEL_DX, VEL_SX) mit einem dazugehörigen Mindestschwellenwert (AMA_DX_MIN, AMA_SX_MIN, VEL_DX_MIN, VEL_SX_MIN) verglichen werden;
und dass der Schritt, bei dem bestimmt wird, ob die Motorhaubebetätigungsbaugruppe (2) aktiviert wird, den Schritt umfasst, bei dem:
- die Motorhaubebetätigungsbaugruppe (2) aktiviert wird, wenn das Aufprallsignal (IMPACT, CMA) zumindest für eine vorbestimmte Mindestdauer (CLOSE_TIME_MIN) in einer ersten vorbestimmten Beziehung zu dem dazugehörigen Mindestschwellenwert (V_MIN) steht und zumindest das erste oder das zweite Beschleunigungssignal (ACC_DX, ACC_SX, AMA_DX, AMA_SX, VEL_DX, VEL_SX) zumindest für eine vorbestimmte Mindestdauer (EVENT_MIN_AMA, EVENT_MIN_VEL) in einer zweiten vorbestimmten Beziehung zu dem dazugehörigen Mindestschwellenwert (AMA_DX_MIN, AM_SX_MIN, VEL_DX_MIN, VEL_SX_MIN) steht.

8. Verfahren nach Anspruch 7, **dadurch gekennzeichnet, dass** der Schritt, bei dem bestimmt wird, ob die Motorhaubebetätigungsbaugruppe (2) aktiviert wird, auch den Schritt umfasst, bei dem:
- die Motorbetätigungsbaugruppe (2) nicht aktiviert wird, wenn weder das erste noch das zweite Beschleunigungssignal (ACC_DX, ACC_SX, AMA_DX, AMA_SX, VEL_DX, VEL_SX) zumindest für eine vorbestimmte Mindestdauer (EVENT_MIN_AMA, EVENT_MIN_VEL) innerhalb einer vorbestimmten Höchstdauer (CLOSE_TIME_MAX) ab dem Zeitpunkt, ab dem das Aufprallsignal (IMPACT, CMA) in der ersten vorbestimmten Beziehung zu dem dazugehörigen Mindestschwellenwert (V_MIN) steht, in der zweiten vorbestimmten Beziehung zu dem dazugehörigen Mindestschwellenwert (AMA_DX_MIN, AMA_SX_MIN, VEL_DX_MIN, VEL_SX_MIN) stehen.

9. Verfahren nach Anspruch 7 oder 8, **dadurch gekennzeichnet, dass** die erste vorbestimmte Beziehung durch die Bedingung definiert ist, dass das Aufprallsignal (IMPACT, CMA) größer ist als der dazugehörige Mindestschwellenwert (V_MIN), und dass die zweite vorbestimmte Beziehung durch die Bedingung definiert ist, dass das Beschleunigungssignal (ACC_DX, ACC_SX, AMA_DX, AMA_SX, VEL_DX, VEL_SX) größer ist als der dazugehörige Mindestschwellenwert (AMA_DX_MIN, AM_SX_MIN, VEL_DX_MIN, VEL_SX_MIN).

10. Verfahren nach einem der Ansprüche 7 bis 9, **dadurch gekennzeichnet, dass** der Schritt, bei dem das Aufprallsignal und das erste und zweite Beschleunigungssignal mit dazugehörigen Schwellenwerten verglichen werden, auch die Schritte umfasst, bei denen:
- das erste und zweite Beschleunigungssignal (ACC_DX, ACC_SX, AMA_DX, AMA_SX, VEL_DX, VEL_SX) mit einem dazugehörigen Höchstschwellenwert (AMA_DX_MAX, AMA_SX_MAX, VEL_DX_MAX, VEL_SX_MAX) verglichen werden;
und dass der Schritt, bei dem bestimmt wird, ob die Motorhaubebetätigungsbaugruppe (2) aktiviert wird, auch den Schritt umfasst, bei dem:
- die Motorhaubebetätigungsbaugruppe (2) aktiviert wird, wenn das Beschleunigungssignal (ACC_DX, ACC_SX, AMA_DX, AMA_SX, VEL_DX, VEL_SX), das zumindest für eine vorbestimmte Mindestdauer (EVENT_MIN_AMA, EVENT_MIN_VEL) in der zweiten vorbestimmten Beziehung zu dem dazugehörigen Mindestschwellenwert (AMA_DX_MIN, AMA_SX_MIN, VEL_DX_MIN, VEL_SX_MIN) steht, auch in einer dritten vorbestimmten Beziehung zu dem dazugehörigen Höchstschwellenwert (AMA_DX_MAX, AMA_SX_MAX, VEL_DX_MAX, VEL_SX_MAX) steht.

11. Verfahren nach Anspruch 10, **dadurch gekennzeichnet, dass** die dritte vorbestimmte Beziehung durch die Bedingung definiert ist, dass das Beschleunigungssignal (ACC_DX, ACC_SX, AMA_DX, AMA_SX, VEL_DX, VEL_SX) kleiner ist als der dazugehörige Höchstschwellenwert (AMA_DX_MAX, AMA_SX_MAX, VEL_DX_MAX, VEL_SX_MAX).

12. Verfahren nach einem der vorhergehenden Ansprüche, **dadurch gekennzeichnet, dass** das Beschleunigungssignal (ACC_DX, ACC_SX, AMA_DX, AMA_SX, VEL_DX, VEL_SX) ein Beschleunigungssignal ist, das von einem Aufprallsensor (7) erzeugt wird, der an der vorderen Stoßstange (8) des Fahrzeugs (1) angeordnet ist.

13. Verfahren nach einem der Ansprüche 1 bis 11, **dadurch gekennzeichnet, dass** das Beschleunigungssignal (ACC_DX, ACC_SX, AMA_DX, AMA_SX, VEL_DX, VEL_SX) der gleitende Durchschnitt eines Beschleunigungssignals ist, das von einem Aufprallsensor (7) erzeugt wird, der an der vorderen Stoßstange (8) des Fahrzeugs (1) angeordnet ist.

14. Verfahren nach einem der Ansprüche 1 bis 11, **dadurch gekennzeichnet, dass** das Beschleunigungssignal (ACC_DX, ACC_SX, AMA_DX, AMA_SX, VEL_DX, VEL_SX) das Zeitintegral eines Beschleunigungssignals ist, das von einem Aufprallsensor (7) erzeugt wird, der an der vorderen Stoßstange (8) des Fahrzeugs (1) angeordnet ist.

15. Verfahren nach einem der Ansprüche 1 bis 11, **dadurch gekennzeichnet, dass** das Beschleunigungssignal (ACC_DX, ACC_SX, AMA_DX, AMA_SX, VEL_DX, VEL_SX) das Zeitintegral des gleitenden Durchschnitts eines Beschleunigungssignals ist, das von einem Aufprallsensor (7) erzeugt wird, der an der vorderen Stoßstange (8) des Fahrzeugs (1) angeordnet ist.

## Revendications

1. Procédé de commande d'un ensemble actionneur (2) de capot de véhicule (1) pour protéger les piétons (3) en cas d'impact sur le pare-chocs avant (8) du véhicule (1), comprenant les étapes de :
- obtenir un signal d'impact (IMPACT, CMA) contenant une information concernant la présence et/ou la durée de l'impact contre le pare-chocs avant (8) ;
- obtenir un premier signal d'accélération (ACC_DX, AMA_DX, VEL_DX) indiquant l'intensité de la décélération induite par l'impact d'un tronçon d'extrémité du pare-chocs avant (8), et un deuxième signal d'accélération (ACC_SX, AMA_DX, VEL_SX) indiquant l'intensité de la décélération induite par l'impact sur un tronçon d'extrémité opposé du pare-chocs avant (8) ;
- comparer le signal d'impact (IMPACT, CMA) et les signaux d'accélération (ACC_DX, ACC_SX, AMA_DX, AMA_SX, VEL_DX, VEL_SX) avec les valeurs seuils respectives (V_MIN, AMA_DX_MIN, AMA_DX_MAX, AMA_SX_MIN. AMA_SX_MAX, VEL_DX_MIN, VEL_DX_MAX, VEL_SX_MIN, VEL_SX_MAX. TH_AMA, TH_VEL) ;
- déterminer si l'ensemble actionneur (2) de capot doit être activé sur la base du résultat des comparaisons ;
**caractérisé en ce que** l'étape de comparaison du signal d'impact et des signaux d'accélération avec les valeurs seuils respectives comprend les étapes de:
- comparer le signal d'impact (IMPACT, CMA) avec la valeur seuil minimum respective (V_MIN) ;
diviser un diagramme des amplitudes des premier et deuxième signaux d'accélération (ACC_DX, ACC_SX, AMA_DX, AMA_SX, VEL_DX, VEL_SX) en une première et une deuxième zone (TH-AMA ; TH-VEL), la première zone étant définie par les amplitudes des premier et deuxième signaux d'accélération (ACC_DX, ACC_SX, AMA_DX, AMA_SX, VEL_DX, VEL_SX) engendrés par l'impact d'un piéton (3) contre le pare-chocs avant (8), et la deuxième zone étant définie par les amplitudes des premier et deuxième signaux d'accélération (ACC_DX, ACC_SX, AMA_DX, AMA_DX, VEL_DX, VEL_SX) engendrés par l'impact d'un objet autre qu'un piéton (3) contre le pare-chocs avant (8) ;
et **en ce que** l'étape consistant à déterminer si l'ensemble actionneur (2) de capot doit être activé comprend l'étape de :
- activer l'ensemble actionneur (2) de capot lorsque le signal d'impact (IMPACT, CMA) correspond à un premier rapport prédéterminé avec la valeur seuil minimum (V_MIN) au moins pour un temps minimum prédéterminé (CLOSE_TIME_MIN) ; et les amplitudes des premier et deuxième signaux d'accélération (ACC_DX, ACC_SX, AMA_DX, AMA_SX, VEL_DX, VEL_SX) sont situées dans la première zone (TH_AMA, TH_VEL).

2. Procédé selon la revendication 1, **caractérisé en ce que** l'étape de comparaison du signal d'impact et du signal d'accélération avec les valeurs seuils respectives comprend les étapes de :
- comparer le signal d'impact (IMPACT, CMA) avec la valeur seuil minimum (V_MIN) respective ;
- comparer le signal d'accélération (ACC_DX, ACC_SX, AMA_DX, AMA_SX, VEL_DX, VEL_SX) avec la valeur seuil minimum (AMA_DX_MIN, AMA-SX_MIN, VEL_DX-MIN, VEL_SX_MIN) respective ;
et **en ce que** l'étape consistant à déterminer si l'ensemble actionneur (2) de capot soit être activé comprend l'étape de :
- activer l'ensemble actionneur (2) de capot lorsque le signal d'impact (IMPACT, CMA) correspond à un premier rapport prédéterminé avec la valeur seuil minimum (\/_MIN) au moins pour un temps minimum prédéterminé (CLOSE_TIME_MIN) ; et le signal d'accélération (ACC_DX, ACC_SX, AMA_DX, AMA_SX, VEL_DX, VEL_SX) correspond au deuxième rapport prédéterminé avec la valeur seuil minimum (AMA_DX_MIN, AM_SX_MIN, VEL_DX_MIN, VEL_SX_MIN) au moins pour un temps minimum prédéterminé (EVENT_MIN_AMA, EVENT_MIN_VEL).

3. Procédé selon la revendication 2, **caractérisé en ce que** l'étape consistant à déterminer si l'ensemble actionneur (2) de capot doit être activé comprend aussi l'étape de :
- ne pas activer l'ensemble actionneur (2) de capot lorsque le signal d'accélération (ACC_DX, ACC_SX, AMA_DX, AMA_SX, VEL_DX, VEL_SX) ne correspond pas au deuxième rapport prédéterminé avec la valeur seuil minimum (AMA_DX_MIN, AM_SX_MIN, VEL_DX_MIN, VEL_SX_MIN) au moins pour un temps minimum prédéterminé (EVENT_MIN_AMA, EVENT_MIN_VEL) dans un temps maximum prédéterminé (CLOSE_TIME_MAX) à partir duquel le signal d'impact (IMPACT, CMA) correspond au premier rapport prédéterminé avec la valeur seuil minimum (V_MIN).

4. Procédé selon la revendication 2 ou 3, **caractérisé en ce que** le premier rapport prédéterminé est défini par la condition selon laquelle le signal d'impact (IMPACT, CMA) doit être supérieur à la valeur seuil minimum (V_MIN) respective, et **en ce que** le deuxième rapport prédéterminé est défini par la condition que le signal d'accélération (ACC_DX, ACC_SX, AMA_DX, AMA_SX, VEL_DX, VEL_SX) doit être supérieur à la valeur seuil minimum (AMA_DX_MIN, AM_SX_MIN, VEL_DX_MIN, VEL_SX_MIN) respective.

5. Procédé selon l'une des revendications 2 à 4, **caractérisé en ce que** l'étape de comparaison comprend aussi l'étape de :
- comparer le signal d'accélération (ACC_DX, ACC_SX, AMA_DX, AMA_SX, VEL_DX, VEL_SX) avec une valeur seuil maximum (AMA_DX_MAX, AM_SX_MAX, VEL_DX_MAX VEL_SX_MAX) respective ;
et **en ce que** l'étape consistant à déterminer si l'ensemble actionneur (2) de capot soit être activé comprend aussi l'étape de :
- activer l'ensemble actionneur (2) de capot lorsque le signal d'accélération (ACC_DX, ACC_SX, AMA_DX, AMA_SX, VEL_DX, VEL_SX) correspond aussi à un troisième rapport avec la valeur seuil maximum (AMA_DX_MAX, AM_SX_MAX, VEL_DX_MAX, VEL_SX_MAX) respective.

6. Procédé selon la revendication 5, **caractérisé en ce que** le troisième rapport prédéterminé est défini par la condition selon laquelle le signal d'accélération (ACC_DX, ACC_SX, AMA_DX, AMA_SX, VEL_DX, VEL_SX) doit être inférieur à la valeur seuil maximum (AMA_DX_MAX, AMA_SX_MAX, VEL_DX_MAX, VEL_SX_MAX) respective.

7. Procédé selon la revendication 1, **caractérisé en ce que** l'étape de comparaison du signal d'impact et du signal d'accélération avec les valeurs seuils respectives comprend l'étape de :
- comparer le signal d'impact (IMPACT, CMA) avec la valeur seuil minimum (V_MIN) respective ;
- comparer les premier et deuxième signaux d'accélération (ACC_DX, ACC_SX, AMA_DX, AMA_SX, VEL_DX, VEL_SX) avec une valeur seuil minimum (AMA_DX_MIN, AM_SX_MIN, VEL_DX_MIN, VEL_SX_MIN) respective ;
et **en ce que** l'étape consistant à déterminer si l'ensemble actionneur (2) de capot doit être activé comprend l'étape de :
- activer l'ensemble actionneur (2) de capot lorsque le signal d'impact (IMPACT, CMA) correspond à un premier rapport prédéterminé avec la valeur seuil minimum (V_MIN) au moins pour un temps minimum prédéterminé (CLOSE_TIME_MIN), et au moins le premier ou deuxième signal d'accélération (ACC_DX, ACC_SX, AMA_DX, AMA_SX, VEL_DX, VEL_SX) correspond au deuxième rapport prédéterminé avec la valeur seuil minimum (AMA_DX_MIN, AMA_SX_MIN, VEL_DX_MIN, VEL_SX_MIN) respective au moins pour un temps minimum prédéterminé (EVENT_MIN_AMA, EVENT_MI N_VEL).

8. Procédé selon la revendication 7, **caractérisé en ce que** l'étape consistant à déterminer si l'ensemble actionneur (2) de capot doit être activé comprend aussi l'étape de :
- ne pas activer l'ensemble actionneur (2) de capot lorsque ni le premier ni le deuxième signal d'accélération (ACC_DX, ACC_SX, AMA_DX, AMA_SX, VEL_DX, VEL_SX) ne correspond au deuxième rapport prédéterminé avec la valeur seuil minimum (AMA_DX_MIN, AMA_SX_MIN, VEL_DX_MIN, VEL_SX_MIN) au moins pour un temps minimum prédéterminé (EVENT_MIN_AMA, EVENT_MIN_VEL) dans un temps maximum prédéterminé (CLOSE_TIME_MAX) à partir duquel le signal d'impact (IMPACT, CMA) correspond au premier rapport prédéterminé avec la valeur seuil minimum (V_MIN).

9. Procédé selon la revendication la revendication 7 ou 8, **caractérisé en ce que** le premier rapport prédéterminé est défini par la condition selon laquelle le signal d'impact (IMPACT, CMA) doit être supérieur à la valeur seuil minimum (V_MIN) respective, et **en ce que** le deuxième rapport prédéterminé est défini par la condition que le signal d'accélération (ACC_DX, ACC_SX, AMA_DX, AMA_SX, VEL_DX, VEL_SX) doit être supérieur à la valeur seuil minimum (AMA_DX_MIN, AM_SX_MIN, VEL_DX_MIN, VEL_SX_MIN) respective.

10. Procédé selon l'une des revendications 7 à 9, **caractérisé en ce que** l'étape de comparaison du signal d'impact et les premier et deuxième signaux d'accélération avec des valeurs seuils respectives comprend aussi les étapes de:
- comparer les premier et deuxième signaux d'accélération (ACC_DX, ACC_SX, AMA_DX, AMA_SX, VEL_DX, VEL_SX) avec une valeur seuil maximum (AMA_DX_MAX, AMA_SX_MAX, VEL_DX_MAX, VEL_SX_MAX) respective ;
et **en ce que** l'étape consistant à déterminer si l'ensemble actionneur (2) de capot doit être activé comprend l'étape de :
- activer l'ensemble actionneur (2) de capot lorsque le signal d'accélération (ACC_DX, ACC_SX, AMA_DX, AMA_SX, VEL_DX, VEL_SX) correspondant au deuxième rapport prédéterminé avec la valeur seuil minimum (AMA_DX_MIN, AM_SX_MIN, VEL_DX_MIN, VEL_SX_MIN) respective au moins pour un temps minimum prédéterminé (EVENT_MIN_AMA, EVENT_MIN_VEL) correspond aussi à un troisième rapport prédéterminé avec la valeur seuil maximum (AMA_DX_MAX, AMA_SX_MAX, VEL_DX_MAX, VEL_SX_MAX) respective.

11. Procédé selon la revendication 10, **caractérisé en ce que** le troisième rapport prédéterminé est défini par la condition selon laquelle le signal d'accélération (ACC_DX, ACC_SX, AMA_DX, AMA_SX, VEL_DX, VEL_SX) est inférieur à la valeur seuil maximum (AMA_DX_MAX, AMA_SX_MAX, VEL_DX_MAX, VEL_SX_MAX) respective.

12. Procédé selon l'une des revendications précédentes, **caractérisé en ce que** le signal d'accélération (ACC_DX, ACC_SX, AMA_DX, AMA_SX, VEL_DX, VEL_SX) est un signal d'accélération engendré par un capteur d'impact (7) situé sur le pare-chocs avant (8) du véhicule (1).

13. Procédé selon l'une des revendications 1 à 11, **caractérisé en ce que** le signal d'accélération (ACC_DX, ACC_SX, AMA_DX, AMA_SX, VEL_DX, VEL_SX) est la moyenne mobile d'un signal d'accélération engendré par un capteur d'impact (7) situé sur le pare-chocs avant (8) du véhicule (1).

14. Procédé selon l'une des revendications 1 à 11, **caractérisé en ce que** le signal d'accélération (ACC_DX, ACC_SX, AMA_DX, AMA_SX, VEL_DX, VEL_SX) est l'intégrale dans le temps d'un signal d'accélération engendré par un capteur d'impact (7) situé sur le pare-chocs avant (8) du véhicule (1).

15. Procédé selon l'une des revendications 1 à 11, **caractérisé en ce que** le signal d'accélération (ACC_DX, ACC_SX, AMA_DX, AMA_SX, VEL_DX, VEL_SX) est l'intégrale dans le temps de la moyenne mobile d'un signal d'accélération engendré par un capteur d'impact (7) situé sur le pare-chocs avant (8) du véhicule (1).
